(19) Europäisches Patentamt
European Patent Office
Office européen des brevets

(11) Publication number: 0 527 174 B1

# EUROPEAN PATENT SPECIFICATION

(45) Date of publication of patent specification: 21.09.94

(51) Int. Cl.5: **C08G 18/10**, C08G 18/48, C08G 18/76

(21) Application number: **91908610.8**

(22) Date of filing: **22.04.91**

(86) International application number:
**PCT/EP91/00772**

(87) International publication number:
**WO 91/17197 (14.11.91 91/26)**

(54) MICROCELLULAR POLYURETHANE POLYMERS PREPARED FROM ISOCYANATE-TERMINATED POLY(OXYTETRAMETHYLENE) GLYCOL PREPOLYMERS.

(30) Priority: **04.05.90 IT 2020590**

(43) Date of publication of application:
**17.02.93 Bulletin 93/07**

(45) Publication of the grant of the patent:
**21.09.94 Bulletin 94/38**

(84) Designated Contracting States:
**DE ES FR GB IT**

(56) References cited:
**CH-A- 601 369**
**DE-A- 3 138 422**
**DE-A- 3 729 822**
**GB-A- 2 055 869**

(73) Proprietor: **DOW ITALIA S.P.A.**
**Via Murat, 23/25**
**I-20159 Milano (IT)**

(72) Inventor: **MUSSINI, Stefano**
**Viale della Pace, 47**
**I-41049 Sassuolo (IT)**

(74) Representative: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

**Description**

This invention relates to a microcellular polyurethane polymer and a process for its preparation using an isocyanate-terminated poly(oxytetramethylene) glycol prepolymer.

Microcellular polyurethane polymer for applications such as, for example, shoe soles typically may be obtained by reaction of an isocyanate compound with an active hydrogen-containing compound such as, for example, a polyester polyol. For processing convenience advantageously, the isocyanate compound is an isocyanate-terminated prepolymer prepared by reaction of an excess of an aromatic diisocyanate with a low molecular weight diol such as, for example, dipropylene glycol and/or tripropylene glycol. Subsequently, such prepolymer is reacted with an active hydrogen-containing composition, frequently comprising a polyester or polyether polyol, in the presence of a physical blowing agent such as, for example, trichlorofluoromethane to provide the polyurethane. The preparation of polyurethane polymer by such procedures is described in, for example, patent publications E.P. 235,888; E.P. 175,733; U.S. 3,591,532; U.S. 3,901,959; U.S. 4,647,596 and U.S. 4,757,095.

Isocyanate-terminated prepolymers obtained, in the manner as described above, from low molecular weight polyols or diols are frequently identified as a "hard-segment" prepolymers in contrast to "soft-segment" prepolymers generally obtained from high molecular weight polyols or diols. The terminology, "hard-" and "soft-segment", derives from the morphology of elastomeric polymers which can contain distinct phase separated regions. Such regions can be detected by thermoanalysis techniques and distinguished by, for example, glass transition temperatures. Generally, soft-segments of the polymer can be considered as having glass transition temperatures below room temperature whilst hard-segments can be considered as having glass transition temperatures above room temperature or even melting points if a crystallite. It is the current opinion and hence their classification that "soft-segment" prepolymers are associated with the formation of the soft-segment phase of the elastomer and conversely hard-segment prepolymers with the hard-segment phase of the elastomer. Structure-property relationships of hard-and soft-segment phases are described for example by Redman in "Developments in Polyurethanes-I" J.M. Buist Ed., Elsevier, London - published 1978. The distinction of the prepolymer type on molecular weight of the polyol used in the preparation of the prepolymer is arbitrary but general such prepolymers obtained from diols or triols having an equivalent weight of about 150 or less are considered to be "hard- segment" prepolymers.

Although providing microcellular polyurethane polymers with commercially attractive physical properties such above-mentioned processes have a number of disadvantages. Firstly, suitable polyester polyols are costly and frequently highly viscous or even low-melting point solids thus requiring handling and processing at elevated temperatures. Secondly, the use of hard-segment prepolymer restricts and makes it difficult to substitute or eventually replace all of the physical blowing agent, with for example water, without affecting significantly the physical properties of the resulting polymer, especially its flexibility and abrasion resistance properties. Polyester polyol-based polyurethane polymers frequently exhibit poor low temperature flexibility, especially at temperatures below about -25⁰C, thus limiting there use in some applications.

As an alternative to polyester polyols, cheaper polyether polyols which generally have lower viscosities and thus can be handled and processed at ambient temperature, may be used in the preparation of the microcellular polyurethane polymers. However, the physical properties of the resulting polymer may and often are inferior compared to polyester-based polymers in for example wear resistance.

Due to current environmental concern relating to the earths atmosphere it is highly desirable to substitute certain physical blowing agents with alternative blowing agents. A highly suitable alternative blowing agent is water. It is therefore desirable to develop a new process for the preparation of polyurethane polymers, particularly microcellular polyurethane polymers, based on polyether polyols allowing for convenient processing and use of a blowing agent comprising water. Particularly it is desired to provide such a process that leads to the manufacture of polyurethane polymers having desirable physical properties at low temperatures, e.g. below 0°C. To this purpose we have investigated the use of "soft-segment" prepolymers in the preparation of polyether polyol-based polyurethane polymers and more particularly the use of "soft-segment" prepolymers obtained by reaction of methylene diphenylisocyanate with a poly(oxytetramethylene)glycol. Such types of prepolymer and their use in the preparation of resilient polyurethane elastomers have been documented in the literature see, for example, U.S. Patent 4,739,027 which discloses the reaction of prepolymer with a chain extending composition containing low molecular weight triol and diol components.

It is now been discovered that polyurethane polymers having commercially attractive physical properties including abrasion resistance and durability may be prepared by a process which comprises contacting under reaction conditions a polyisocyanate composition comprising an isocyanate-terminated

2

poly(oxytetramethylene) glycol prepolymer with an active hydrogen-containing composition.

In a first aspect, this invention is a process for preparing a microcellular polyurethane polymer by intimately contacting under reaction conditions forcast polymers an organic polyisocyanate composition with an active hydrogen-containing composition in the presence of a blowing agent comprising water characterized in that

a) the polyisocyanate composition comprises, in from at least 70 weight percent, an isocyanate-terminated prepolymer which has an isocyanate content of from 14 to 28 weight percent and which is obtained by reacting a polyisocyanate containing, in from at least 70 weight percent, 4,4′-methylene diphenylisocyanate with a poly(oxytetramethylene) glycol which has an average hydroxyl equivalent weight of from 250 to 1500;

b) the active hydrogen-containing composition comprises:

i) from 70 to 99 parts by weight of a polyether polyol or mixtures thereof which has an average hydroxyl equivalent weight of from 500 to 5000, an average molar functionality of from 1.6 to 3.0 and a primary hydroxyl content of at least 50 percent of its total hydroxyl content; and

ii) in from 1 to 30 parts by weight of a chain-extending agent which has an equivalent weight of less than or equal to 150; and

c) the blowing agent which comprises water in an amount of 0.05 to 2 pbw based on the total weight of the active hydrogen-containing composition is present in an amount sufficient to provide the resulting polymer with an overall density of from 100 to 1000kg/m$^3$,

and wherein the polyisocyanate composition (a) is present in an amount so as to provide from 0.85 to 1.3 isocyanate groups per active hydrogen atom of the composition(b) and water present.

In a second aspect, this invention is an isocyanate-terminated poly(oxytetramethylene)glycol prepolymer that has an isocyanate content of from 14 to 28 weight percent obtained by intimately mixing under reaction conditions a poly(oxytetramethylene)glycol which has an average hydroxyl equivalent weight of from about 250 to about 1500 with a molar excess of an organic polyisocyanate containing

a) in from at least 70 weight percent, 4,4'-methylene diphenylisocyanate, and

b) up to 30 weight percent of 2,4'-methylene diphenylisocyanate, 2,4- and 2,6-toluene diisocyanate, cyclohexane diisocyanate, 1,6-hexamethylene diisocyanate, carbodiimide-modified adducts thereof or polymethylenepolyphenyl-polyisocyanate.

Surprisingly it has been found that by using such "soft-segment" prepolymers as described above in place of the normally employed "hard-segment" isocyanate-prepolymers prepared from low molecular weight diols, then an active hydrogen-containing composition comprising a polyether polyol can be employed to advantage for the preparation of microcellular polyurethane polymers providing good processability and resulting polymeric products. By low molecular weight diols it is understood compounds having an equivalent weight of 150 or less.

Microcellular Polyurethane polymers are prepared according to the process of this invention by intimately contacting under adequate reaction conditions as described hereinbelow an organic polyisocyanate composition with an active hydrogen-containing composition in the presence of a blowing agent comprising water. The polyisocyanate composition is present in an amount to provide from 0.85 to 1.30 isocyanate groups per active hydrogen atom of the active hydrogen-containing composition and water present. Preferably, the polyisocyanate composition is present in an amount to provide from 0.94, more preferably from 0.95 and most preferably from 0.96 and up to 1.05, more preferably up to 1.04 and most preferably up to 1.02 isocyanate groups per active hydrogen atom of the active hydrogen-containing composition and water present.

The polyisocyanate composition is characterized in that it comprises, in from at least 70, preferably from at least 80 and more preferably from at least 90, and up to 100 weight percent of the total weight of the isocyanate composition, a poly(oxytetramethylene) glycol-based isocyanate-terminated prepolymer. When the polyisocyanate composition does not comprise in its entirety the isocyanate-terminated prepolymer, other polyisocyanates that can be present include aliphatic or preferably aromatic polyisocyanates as described in, for example U.S. Patents 4,065,410; 3,401,180; 3,454,606; 3,152,162; 3,492,330; 3,001,973; 3,394,164 and 3,124,605. Particularly suitable aromatic polyisocyanates include 2,4- and/or 2,6-toluene diisocyanate (TDI), 2,4'- and/or 4,4'-methylene diphenylisocyanate (MDI), p-phenylene diisocyanate and polymethylenepolyphenyl-polyisocyanates and mixtures thereof. Also useful are polymeric derivatives of MDI, as well as carbodiimide-containing derivatives of MDI. Particularly suitable aliphatic polyisocyanates include the hydrogenated derivatives of the foregoing aromatic polyisocyanates, as well as hexamethylene diisocyanate, isophorone diisocyanate and 1,4-cyclohexane-diisocyanate.

The poly(oxytetramethylene) glycol-based isocyanate-terminated prepolymer present in the polyisocyanate composition is characterized in that it has an average isocyanate content of from 14 to 28, preferably from 14 to 23, and more preferably from 15 to 21 weight percent. The use of prepolymers having an isocyanate content outside this range may not provide for desirable processability or physical properties of the resulting polymer.

The prepolymer is obtained by mixing under reaction conditions a molar excess of an organic polyisocyanate containing, in from at least 70, preferably from at least 85, and more preferably in from at least 93 weight percent, 4,4'-methylene diphenylisocyanate with a poly(oxytetramethylene) glycol which has an average hydroxyl equivalent weight of from 250, preferably from 500, and more preferably from 750 and up to 1500, preferably up to 1200 and more preferably up to 1000. The polyisocyanate used to prepare the prepolymer may contain other isocyanates including, for example, 2,4'-methylene diphenylisocyanate, 2,4- and 2,6-toluene diisocyanate, cyclohexane diisocyanate, 1,6 hexamethylene diisocyanate and carbodiimide-modified adducts thereof. When such other isocyanates are present advantageously it is in an amount not exceeding 30, preferably not exceeding 15 and more preferably not exceeding 7 weight percent by total weight of organic polyisocyanate to be reacted with the poly(oxytetramethylene) glycol. Most preferably such other isocyanates are absent or present in only trace amounts. By "trace" amount, it is understood up to 2 weight percent.

When preparing the prepolymer, the quantity of poly(oxytetramethylene) glycol employed for a given quantity of polyisocyanate is dependent up on the glycols' equivalent weight and the desired isocyanate content of the resulting prepolymer. By way of illustration, suitable prepolymers are those prepared where the organic polyisocyanate consisting essentially of 4,4'-methylene diphenylisocyanate is present in from 40, preferably from 50, and up to 90, preferably up to 80 and more preferably up to 70 parts by weight; and wherein the poly(oxytetramethylene) glycol is present in from 10, preferably from 20 and more preferably from 30 and up to 60 and preferably up to 50 parts by weight. When lower equivalent weight poly-(oxytetramethylene) glycols are used to prepare the prepolymers, they are employed in smaller quantities relative to higher molecular weight poly(oxytetramethylene) glycols for a given weight of isocyanate.

The active hydrogen-containing composition used in the process of this invention is characterized in that it comprises as first component a polyether polyol or mixtures thereof and as a second component a chain-extending agent. The polyether polyol component of the active hydrogen-containing composition is advantageously present in an amount of from 70, preferably from 75, and more preferably from 80, and up to 99, preferably up to 95, and more preferably up to 90 parts by weight of total weight of the active composition. As second component, the chain-extending agent advantageously is present in quantities of from 1, preferably from 5, and more preferably from 6 and up to 30, preferably up to 15 and more preferably up to 13 parts by weight of total weight of the active hydrogen-containing composition. The optimum amount of chain-extending agent present depends on its equivalent weight and the physical properties desired for the resulting polymer. Greater molar quantities of chain-extending agent generally provide for polymers which are harder and somewhat less flexible. Generally the polyurethane polymers produced by the process of this invention are characterized by having a Shore A Hardness of from at least 30A, preferably from 40A to 75A, more preferably from 45A to 70A, and most preferably from 50A to 70A.

The polyether polyol component of the active hydrogen-containing composition is characterized in that it has an average functionality of from 1.6, preferably from 1.8 and more preferably from 1.9, and up to 3.0; an average hydroxyl equivalent weight of from 500 to 5000, preferably from 1000 to 3000, and more preferably from 1500 to 2500; and a primary hydroxyl content of at least 50 and preferably at least 75 percent of its total hydroxyl content. By "average functionality" it is understood the average number of isocyanate-reactive hydrogen atoms per molecule.

Suitable polyether polyols for use as the component of the active hydrogen-containing composition in the process of this invention include those obtained by reaction of a suitable active hydrogen-containing initiator with a quantity of one or more $C_{2-4}$ alkylene oxides including 1,4-butylene oxide, 2,3-butylene oxide, and especially propylene oxide and ethylene oxide, to give a product of desired hydroxyl nature and equivalent weight. Suitable processes for the preparation of the polyether polyols are such as, for example, disclosed by Wurtz in 1859 (see Encyclopedia of Chemical Technology, Vol. 7, pp. 257-262, published by Interscience Publishers, Inc. (1951) or U.S. Patents 1,922,459 and 3,040,076. Generally, the alkylene oxide-(s) is polymerized at pressures above atmospheric pressure with an initiator in the presence of a strongly basic material such as an alkali metal hydroxide or tertiary amine acting as an alkoxylation catalyst. Suitable catalysts include potassium hydroxide and sodium hydroxide. For the purpose of this invention, active hydrogen atoms are defined as those hydrogens which react positively in the Zerewitinoff test, see Kohler, J.Amer.Chem.Soc., Vol. 49, p. 3181 (1927). Representative of groups containing such active hydrogen atoms are -OH, -COOH, -SH and -NHR where R can be hydrogen, alkyl, cycloalkyl, aryl aromatic and so forth.

4

EP 0 527 174 B1

Exemplary of suitable initiators bearing such active hydrogen atoms are polyols, polyether adducts of polyols, polyamines and other compounds having a plurality of active hydrogen atoms per molecule, such as are described in column 2 of U.S. Patent 4,500,422. Preferred initiators for use in preparing such polyether polyols employed within the polyol blend used in this invention are ethylene glycol, propylene glycol, butylene glycol, glycerine, 1,1,1-trimethylolpropane, 1,1,1-trimethylolethane, $\alpha$-methylglucoside, $C_{2-8}$ alkylene diamines such as, for example, ethylenediamine and hexamethylenediamine. Especially preferred are the glycol initiators or alkoxylated adducts of such glycols. Exemplary of commercially available and preferred polyether polyols for use in the process of this invention are those polyether polyol products identified by the trademark "Voranol" and include Voranol EP 1900 and Voranol CP 6055, sold by The Dow Chemical Company.

In addition to the polyether polyol component described hereinabove other suitable polyols include so-called polymer polyols based on polyether polyols such as described in columns 3-5 of U.S. Patent 4,394,491. Among the useful polymer polyols are included dispersions of polymers, of especially vinyl monomers particularly styrene/acrylonitrile copolymers, in a continuous polyether polyol phase. Also useful are the so-called polyisocyanate polyaddition (PIPA) polyols (dispersions of polyurea-polyurethane particles in a polyol) and the polyurea dispersions in polyol such as for example PHD polyols. Copolymer polyols of the vinyl type are described, for example, in U.S. Patents 4,390,645; 4,463,107; 4,148,840 and 4,574,137. Other additional suitable polyols that may be present include poly(oxytetramethylene) glycols, though they are less preferred due to their frequently higher viscosities.

As second component of the active hydrogen-containing composition, the chain-extending agent is characterized in that it is an organic compound, generally a polyfunctional and especially a difunctional isocyanate-reactive compound that has an equivalent weight of less than or equal to 150 and preferably less than or equal to 100. Suitable chain-extending agents include polyhydric alcohols, aliphatic diamines and aromatic diamines. Preferred chain-extending agents for use in the process of this invention are dihydroxyl compounds, especially glycols. Representative of suitable chain-extending agents include dihydroxyl compounds comprising aliphatic, cycloaliphatic or aromatic dihydroxyl compounds having from 2 to 10 carbon atoms. Exemplary of such dihydroxyl compounds are diols including 1,2-ethanediol, 1,3-propanediol, 1,5-pentanediol, 1,6-hexanediol, 1,2-propanediol, 1,3-butanediol, 1,4-butanediol, 2,3-butanediol, 1,3-pentanediol, 1,6-hexanediol, 3-methylpentane-1,5-diol, 1,4-cyclohexanediol, 1,4-cyclohexanedimethanol and mixtures of two or more such diols. Compounds such as ethoxylated hydroquinone can also be employed as a chain-extending agent. The above-mentioned chain-extending agents can be used alone or admixture or with other compounds including diethylene glycol, dipropylene glycol, ethanolamine, and N-methyldiethanolamine, and N-ethyldiethanolamine as well as adducts obtained by esterfication of, aliphatic carboxylic acids with aliphatic diols or triols such as those exemplified above utilizing from 0.01 to 1.08 mole of acid per mole of diol/triol. Also included as chain-extending agents which can be used in the process of this invention are adducts obtained from an aliphatic diol or triol such as 1,4-cyclohexane dimethanol, neopentyl glycol, hexane-1,2-diol, ethylene glycol, butane-1,4-diol and trimethylol propane with caprolactone in a mole ratio of from 0.01 to 2 moles of caprolactone per mole of diol or triol. While any of the chain-extending agents exemplified above can be employed in the process of the invention it is preferred to used 1,4-butanediol, 1,6-hexanediol, neopentyl glycol, 1,4-cyclohexane diol, ethylene glycol, bishydroxyethoxybenzene, ethoxylated hydroquinone glycerine, and diethylene glycol either alone or in admixture. Especially preferred as chain-extending agent is 1,4-butanediol.

As mentioned hereinabove the microcellular polyurethane polymer is prepared in the presence of a blowing agent comprising water. The blowing agent is employed in a amount to provide a polymer having an overall density of typically from 100, preferably from 300 and more preferably from 400 and up to 1000, preferably up to 900 kg/m$^3$. The amount of water which may be present depends on the desired density of the polymer but it is advantageously from 0.05 to 2, preferably from 0.1 to 1.5 and more preferably from 0.1 to 1.0 weight percent based on the total weight of the active hydrogen-containing composition. Water reacts with isocyanate groups leading to the generation of carbon dioxide which then causes the polymer-forming reaction mass to expand.

If necessary, the blowing agent in addition to comprising water may also contain suitable physical blowing agents which are low boiling point liquids, generally organic compounds that can vaporize under the influence of the reaction exotherm. Such blowing agents generally have a boiling point below 100°C and include halogenated hydrocarbons such as for example methylene chloride, trichlorofluoromethane, dichlorodifluoromethane, dichlorofluoromethane, dichlorotetrafluoroethane, 1,1,2-trichloro-1,2,2-trifluoroethane, 1,1,1-trichloroethane, trichlorodifluoroethane and trichlorofluoroethane. Mixtures of these low boiling liquids with each other and or with hydrocarbons such as, for example, pentane may be used. Typically when present such physical blowing agents are used in an amount of from 0.1 to 16, preferably

5

from 1 to 10 and more preferably from 2 to 6 weight percent by total weight of the active hydrogen-containing composition. When present, it is preferred that such physical blowing agent is a compound considered environmentally acceptable such as, for example, a hydrogen-containing chlorofluorocarbon like trichlorodifluoroethane and/or trichlorofluoroethane.

In the process of this invention optionally but advantageously there is present additional additives such as catalysts, surfactants, fillers, pigments, antioxidants, and antistatic agents. The use of such additives is well-known in the art and reference is made thereto for this purpose.

Suitable catalysts include the tertiary amine and organometallic compounds such as described in U.S. Patent 4,495,081. When making the polymers by the process of this present invention it is preferred to use catalyst, which when an amine catalyst advantageously is present in from 0.1 to 3, preferably from 0.1 to 1 and more preferably from 0.4 to 0.8 weight percent by total weight of active hydrogen-containing composition. When the catalyst is an organometallic catalyst, advantageously it is present in from 0.001 to 0.2, preferably from 0.002 to 0.1 and more preferably from 0.01 to 0.05 weight percent by total weight of the active hydrogen-containing composition. Particularly useful catalysts are in the case of amine catalysts; triethylenediamine, bis(N,N-dimethylaminoethyl)ether and di(N,N-dimethylaminoethyl)amine and in the case of the organometallic catalysts; stannous octoate, dibutyltin dilaurate, and dibutyltin diacetate. Combinations of amine and organometallic catalysts may also be employed.

Suitable surfactants include the diverse silicone surfactants, preferably those which are block copolymers of a polysiloxane and a polyoxyalkylene. Exemplary of such surfactants are the products DC-193 and Q4-3667 available from Dow Corning and Tegostab B4113 available from Goldschmidt. When present, the amount of surfactant(s) advantageously employed is from 0.1 to 2, and preferably from 0.2 to 1.3 weight percent by total weight of the active hydrogen-containing composition. Other suitable surfactants also include non-silicone containing surfactants, such as poly(alkyleneoxides).

Suitable pigments and fillers include for example calcium carbonate, graphite, carbon black, titanium dioxide, iron oxide, alumina trihydrate, wollastonite, prepared glass fibers dropped or continuous, polyesters and other polymeric fibers .

In the process of this invention the so prepared polymers may be manufactured by a one shot method according to the known reaction injection molding techniques such as described in, for example, Polyurethanes Handbook by Günter Oertel Hanser Publishes Munich ISBN 0-02-948920-2 (1985). Other suitable methods for preparing microcellular and elastomeric polyurethane polymers are described in, for example, U.S. Patents 4,297,444; 4,218,543; 4,444,910; 4,530,941 and 4,269,945.

The microcellular polymers prepared according, to the the process of this invention are cast polymers. Such a polymer is advantageously prepared by mixing the reaction components at room temperature or slightly elevated temperature and then pouring into an open mold, or injecting the reacting mixture into closed mold, which in either case is heated. The reaction mixture on reacting out takes the shape of the mold to produce a polyurethane polymer of a predefined structure, which can then when sufficiently cured be removed from the mold. Suitable conditions for curing, when a cast polymer is formed, include a mold temperature of typically from 20°C to 150°C, preferably from 35°C to 75°C, and more preferably from 45°C to 55°C, which typically results in a cure time of from 1 to 30 minutes and more typically from 1 to 10 minutes. Optimum cure conditions will depend on the particular components including catalysts and quantities used in preparing the polymer and also the size and shape of the article manufactured.

The microcellular polymer produced according to the the process of this invention is useful in the preparation of articles such as rollers, door seals, coatings, tires, wiper blades, gaskets, belts, and shoe soles, and is especially useful in these applications where exposure to reduced temperatures, especially below -25°C, may frequently take place. The microcellular polymer is additionally useful in the preparation of upholstery materials, packing materials and insulation for sound or heat and automotive applications such as, for example, head rests and steering wheels.

This following examples are provided to illustrate the invention but are not intended to limit the scope thereof. All parts and percentages are given by weight unless otherwise indicated. The physical properties of the microcellular polymers where reported are observed according to the following procedures; density-DIN 53420; hardness (Shore A)-DIN 53505; abrasion resistance-DIN 535316; tensile strength and elongation-DIN 53504; tear strength-DIN 53507 and bending resistance-DIN 53543.

A number of isocyanate-terminated prepolymers are prepared for use in manufacturing polyurethane polymers by the process of this invention. The prepolymers are obtained by reacting a polyisocyanate containing 4,4'-methylene diphenylisocyanate(4,4'-MDI) with a poly(oxytetramethylene) glycol(PTMG) according to the following general procedure; the quantities and types of isocyanate and glycol used are given in Table I. The given amount of polyisocyanate is contacted under reaction conditions with the given quantity of glycol and the resulting mixture stirred for about 3 hours at a temperature of from about 70°C to about 75°C before cooling to room temperature. The resulting isocyanate-terminated prepolymer is stabilized by addition of a trace amount, 100 ppm, of benzoyl chloride. The isocyanate content of the so obtained prepolymers and their viscosities are also given in Table I.

Table I

| Reactants (parts by weight) | Pre-polymer 1 | Pre-polymer 2 | Pre-polymer 3 | Pre-polymer 4 | Pre-polymer 5 | Pre-polymer 6 | Pre-polymer 7 | Pre-polymer 8 | Pre-polymer 9 | Pre-polymer 10 |
|---|---|---|---|---|---|---|---|---|---|---|
| PTMG eq. wt. 1000 | 1034 | 886 | 716 | 546 | 750 | 560 | 368 | / | / | / |
| PTMG eq. wt. 500 | / | / | / | / | / | / | / | 797 | 706 | 611 |
| 4,4'-MDI | 966 | 1115 | 1284 | 1454 | 1175② | 1354② | 1534② | 1203 | 1294 | 1389 |
| M143① | / | / | / | / | 75 | 86 | 98 | / | / | / |
| NCO wt. percent | 14.0 | 16.8 | 20.0 | 23.2 | 16.8 | 20.0 | 23.0 | 16.8 | 18.7 | 20.7 |
| Viscosity cSt (25°C) | 3060 | 1500 | 820 | 300 | 2370 | 1100 | 400 | 1230 | 750 | 410 |

① A carbodiimide modified 4,4'-methylene diphenylisocyanate having an isocyanate content of about 28 weight percent, designated as ISONATE 143 and sold by The Dow Chemical Company.

② The 4,4'-MDI represents 94 percent by weight of the total isocyanate present for reaction with the PTMG.

7

The following examples illustrate the use of the prepolymers to prepare polyurethane polymers. The additional reactants and components present when preparing the polyurethane polymers are identified as follows:

Polyol-1;         a poly(oxypropylene-oxyethylene) diol, equivalent weight 2000, primary hydroxyl content 92 percent

Polyol-2;         a poly(oxypropylene-oxyethylene) glycerine-initiated polyol, equivalent weight 2000, primary hydroxyl content 79 percent.

TEDA         triethylenediamine

DBTDL         dibutyltin dilaurate

Refrigerant-11,         trichlorofluoromethane.

Polymer Examples 1 to 13

Molded microcellular polyurethane polymers are prepared according to the following formulation given in Table II, employing a mold with dimensions of 20 x 20 x 1.0 cm thermostated to 45°C; demold time 4 minutes. Physical properties of the resulting polymers are also reported in Table II. Examples 1 to 6 illustrate the variance of physical properties with isocyanate reaction index and Examples 7 to 11 the variance of such properties with molded density. Example 13 illustrates preparation of a polymer using only water as the blowing means.

Table II

| Formulation (parts) | Ex. 1 | Ex. 2 | Ex. 3 | Ex. 4 | Ex. 5 | Ex. 6 | Ex. 7 | Ex. 8 | Ex. 9 | Ex.10 | Ex. 11 | Ex. 12 | Ex. 13 |
|---|---|---|---|---|---|---|---|---|---|---|---|---|---|
| Polyol-1 | 59.2 | 59.2 | 59.2 | 58.5 | 58.5 | 58.5 | 59.9 | 59.9 | 59.9 | 59.9 | 59.9 | 58.3 | 62.3 |
| Polyol-2 | 25.4 | 25.4 | 25.4 | 25.1 | 25.1 | 25.1 | 25.7 | 25.7 | 25.7 | 25.7 | 25.7 | 24.7 | 26.8 |
| 1,4-BDO | 8.6 | 8.6 | 8.6 | 9.6 | 9.6 | 9.6 | 7.7 | 7.7 | 7.7 | 7.7 | 7.7 | 9.7 | 9.3 |
| TEDA | 0.6 | 0.6 | 0.6 | 0.6 | 0.6 | 0.6 | 0.5 | 0.5 | 0.5 | 0.5 | 0.5 | 0.6 | 0.67 |
| DBTDL | 0.02 | 0.02 | 0.02 | 0.02 | 0.02 | 0.02 | 0.016 | 0.016 | 0.016 | 0.016 | 0.016 | 0.02 | 0.02 |
| Water | 0.18 | 0.18 | 0.18 | 0.18 | 0.18 | 0.18 | 0.18 | 0.18 | 0.18 | 0.18 | 0.18 | 0.17 | 0.46 |
| R-11 | 6.0 | 6.0 | 6.0 | 6.0 | 6.0 | 6.0 | 6.0 | 6.0 | 6.0 | 6.0 | 6.0 | 6.0 | / |
| Prepolymer-2 | 62 | 63 | 64 | 67 | 69 | 70 | 63 | 63 | 63 | 63 | 63 | 69 | 73 |
| NCO/OH Index | 0.98 | 1.0 | 1.02 | 0.98 | 1.0 | 1.02 | 1.0 | 1.0 | 1.0 | 1.0 | 1.0 | 1.00 | 0.96 |
| Density (Kg/m³) | 580 | 580 | 585 | 580 | 580 | 570 | 490 | 550 | 590 | 640 | 685 | 640 | 630 |
| Hardness (Shore A) | 43 | 44 | 45 | 47 | 49 | 48 | 38 | 43 | 45 | 48 | 52 | 63 | 56 |
| Abrasion Loss (mg) | 240 | 210 | 191 | 200 | 190 | 170 | 185 | 177 | 149 | 153 | 144 | 150 | 215 |
| Tensile Strength (N/mm2) | 2.5 | 3.4 | 2.6 | 2.7 | 3.5 | 3.2 | 3.2 | 3.4 | 3.8 | 4.5 | 5.4 | 5.4 | 4.8 |
| Elongation (%) | 630 | 650 | 610 | 475 | 630 | 560 | 630 | 665 | 675 | 715 | 810 | 550 | 590 |

Polymer Example 14

This example illustrates a microcellular polymer prepared according to the process of the invention and its resulting physical properties in comparison to a microcellular polymer obtained using a typical commercially available "hard-segment" isocyanate-terminated prepolymer, Comparative prepolymer A, reacted with a polyether polyol. The "hard-segment" isocyanate-terminated prepolymer, Isonate™ PM 180 sold by The Dow Chemical Company has an isocyanate content of 23.3 weight percent and is the product of 4,4'-methylene diphenylisocyanate with a mixture of tripropylene and dipropylene glycol.

The formulation used to prepare the polymer and some of the physical properties of the resulting polymer are presented in Table III. As can be observed, the polymers produced by the process of this invention having a similar molded density and hardness, generally display enhanced physical properties including abrasion resistance, tensile strength and low temperature flexibility.

Table III

| Formulation | Ex. 14 | Comp. Ex. A* |
|---|---|---|
| NCO/OH Index | 1.0 | 1.0 |
| Prepolymer-1 | 69 | / |
| Comparative Prepolymer-A* | / | 42 |
| Polyol-1 | 58.3 | 70.5 |
| Polyol-2 | 24.7 | 15.0 |
| 1,4-BDO | 9.7 | 7.70 |
| TEDA | 0.60 | 0.54 |
| DBTDL | 0.02 | 0.02 |
| Water | 0.17 | 0.17 |
| R-11 | 6.0 | 6.0 |
| Density (Kg/m$^3$) | 600 | 600 |
| Hardness (Shore A) | 56 | 55 |
| Abrasion Loss (mg) | 170 | 270 |
| Tensile Strength (N/mm$^2$) | 4.9 | 4.4 |
| Bending Resistance; No. of Kcycles to fracture | | |
| i ) -20°C<br>ii ) -50°C | > > 100<br>40 | > 50<br>no fracture |

* Not an example of this invention

Polymer Examples 15 to 24

The following examples illustrate the preparation of polyurethane polymers according to the process of this invention by reacting other PTMG-based prepolymers or combinations with an active hydrogen-containing composition comprising polyether polyol and chain extending agent, in the presence of water as the sole blowing means. Formulation details and some of the physical properties of the resulting polymers are given in Table IV.

Polymers obtained by reacting a polyisocyanate composition containing a combination of PTMG-based isocyanate-terminated prepolymers exhibit especially interesting physical properties including abrasion performance and elongation.

EP 0 527 174 B1

Table IV

| Formulation (parts) | Ex. 15 | Ex. 16 | Ex. 17 | Ex. 18 | Ex. 19 | Ex. 20 | Ex. 21 |
|---|---|---|---|---|---|---|---|
| Polyol-1 | 57.3 | 57.3 | 57.3 | 57.3 | 57.3 | 57.3 | 57.3 |
| Polyol-2 | 30.8 | 30.8 | 30.8 | 30.8 | 30.8 | 30.8 | 30.8 |
| 1,4-BDO | 10.2 | 10.2 | 10.2 | 10.2 | 10.2 | 10.2 | 10.2 |
| TEDA | 0.66 | 0.66 | 0.66 | 0.66 | 0.66 | 0.66 | 0.66 |
| DBTDL | 0.02 | 0.02 | 0.02 | 0.02 | 0.02 | 0.02 | 0.02 |
| Surfactant | 0.5 | 0.5 | 0.5 | 0.5 | 0.5 | 0.5 | 0.5 |
| Water | 0.5 | 0.5 | 0.5 | 0.5 | 0.5 | 0.5 | 0.5 |
| Prepolymer-2 | 80 | / | / | / | 77 | 75 | 72 |
| Prepolymer-3 | / | 67 | / | / | / | / | / |
| Prepolymer-4 | / | / | 58 | 46① | / | / | / |
| Prepolymer-5 | / | / | / | / | 3 | 5 | 8 |
| Comparative Prepolymer A* | / | / | / | 12 | / | / | / |
| NCO/OH Index | 0.98 | 0.98 | 0.98 | 0.98 | 0.98 | 0.98 | 0.98 |
| Density (Kg/m$^3$) | 600 | 600 | 600 | 600 | 600 | 600 | 600 |
| Hardness (Shore A) | 55 | 56 | 57 | 58 | 53 | 54 | 54 |
| Abrasion Loss (mg) | 220 | 330 | 330 | 340 | 240 | 190 | 200 |
| Tensile Strength (N/mm$^2$) | 5.7 | 5.1 | 4.7 | 5.2 | 5.6 | 5.8 | 5.4 |
| Elongation (%) | 550 | 470 | 480 | 470 | 480 | 500 | 520 |

\* Comparative prepolymer A same as described in Polymer Example 14 description
① Prepolymer-4 constitutes 79 weight percent of the total polyisocyanate composition.

## Claims
## Claims for the following Contracting States : DE, FR, GB, IT

1. A process suitable for preparing a microcellular polyurethane polymer by intimately mixing under reaction conditions for cast polymers an organic polyisocyanate composition with an active hydrogen-containing composition in the presence of a blowing agent comprising water, characterized in that

   a) the polyisocyanate composition comprises, in from at least 70 weight percent, an isocyanate-terminated prepolymer which has an isocyanate content of from 14 to 28 weight percent and is obtained by reacting a polyisocyanate containing, in from at least 70 weight percent, 4,4'-methylene diphenylisocyanate with a poly(oxytetramethylene) glycol which has an average hydroxyl equivalent weight of from 250 to 1500;

   b) the active hydrogen-containing composition comprises

   i) from 70 to 99 parts by weight of a polyether polyol or mixtures thereof which has an average hydroxyl equivalent weight of from 500 to 5000, an average molar functionality of from 1.6 to 3.0 and a primary hydroxyl content of at least 50 percent of its total hydroxyl content; and

   ii) in from 1 to 30 parts by weight of a chain-extending agent which has an equivalent weight of less than or equal to 150; and

   c) the blowing agent which comprises water in an amount of 0.05 to 2 parts by weight based on the total weight of the active hydrogen-containing composition and which is present in an amount sufficient to provide the resulting polymer with an overall density of from 100 to 1000 kg/m$^3$,

   and wherein the polyisocyanate composition (a) is present in an amount so as to provide from 0.85 to 1.3 isocyanate groups per active hydrogen atom of the composition(b) and water present.

11

**2.** A process as claimed in Claim 1 wherein the polyisocyanate composition is present in an amount to provide from 0.94 to 1.05 isocyanate groups per active hydrogen atom of the composition and water present.

**3.** A process as claimed in Claim 2 wherein the isocyanate-terminated prepolymer has an isocyanate content of from 14 to 23 weight percent.

**4.** A process as claimed in Claims 1 to 3 wherein the isocyanate-terminated prepolymer is obtained from a poly(oxytetramethylene) glycol which has an average hydroxyl equivalent weight of from 500 to 1200.

**5.** A process as claimed in any one of the preceding claims wherein the polyether polyol component of the active hydrogen-containing composition is present in an amount of from 75 to 95 parts by weight and has an average hydroxyl equivalent weight of from 1000 to 3000 and a primary hydroxyl content of at least 75 percent, and wherein the chain-extending agent is present in an amount of from 5 to 15 parts by weight.

**6.** A process as claimed in Claim 1 wherein the blowing agent is present in an amount to provide the resulting polymer with an overall density of from 400 to 900 kg/m$^3$.

**7.** A process as claimed in Claim 6 wherein
a) the polyisocyanate composition comprises, in from at least 90 weight percent, an isocyanate-terminated prepolymer which has an isocyanate content of from 14 to 23 weight percent that is obtained by reacting a polyisocyanate containing, in from at least 85 weight percent, 4,4'-methylene diphenylisocyanate with a poly(oxytetramethylene) glycol which has an average hydroxyl equivalent weight of from 750 to 1200; and
b) the active hydrogen-containing composition comprises
i) from 75 to 90 parts by weight of a polyether polyol or mixtures thereof which has an average hydroxyl equivalent weight of from 1000 to 3000, an average molar functionality of from 1.9 to 3.0 and a primary hydroxyl content of at least 75 percent of its total hydroxyl content; and
ii) from 5 to 15 parts by weight of a chain-extending agent,
wherein (a) is present in an amount to provide from 0.96 to 1.04 isocyanate groups per active hydrogen atom of the composition and water.

**8.** A process as claimed in Claim 7 wherein the blowing agent consists essentially of water.

**9.** A microcellular polyurethane polymer prepared according to a process as claimed in any one of the preceding claims.

**Claims for the following Contracting State : ES**

**1.** A process suitable for preparing a microcellular polyurethane polymer by intimately mixing under reaction conditions for cast polymers an organic polyisocyanate composition with an active hydrogen-containing composition in the presence of a blowing agent comprising water, characterized in that
a) the polyisocyanate composition comprises, in from at least 70 weight percent, an isocyanate-terminated prepolymer which has an isocyanate content of from 14 to 28 weight percent and is obtained by reacting a polyisocyanate containing, in from at least 70 weight percent, 4,4ʹ-methylene diphenylisocyanate with a Poly(oxytetramethylene) glycol which has an average hydroxyl equivalent weight of from 250 to 1500;
b) the active hydrogen-containing composition comprises
i) from 70 to 99 parts by weight of a polyether polyol or mixtures thereof which has an average hydroxyl equivalent weight of from 500 to 5000, an average molar functionality of from 1.6 to 3.0 and a primary hydroxyl content of at least 50 percent of its total hydroxyl content; and
ii) in from 1 to 30 parts by weight of a chain-extending agent which has an equivalent weight of less than or equal to 150; and
c) the blowing agent which comprises water in an amount of 0.05 to 2 parts by weight based on the total weight of the active hydrogen-containing composition, and which is present in an amount sufficient to provide the resulting polymer with an overall density of from 100 to 1000 kg/m$^3$,
and wherein the polyisocyanate composition (a) is present in an amount so as to provide from 0.85 to

EP 0 527 174 B1

1.3 isocyanate groups per active hydrogen atom of the composition(b) and water present.

2. A process as claimed in Claim 1 wherein the polyisocyanate composition is present in an amount to provide from 0.94 to 1.05 isocyanate groups per active hydrogen atom of the composition and water present.

3. A process as claimed in Claim 2 wherein the isocyanate-terminated prepolymer has an isocyanate content of from 14 to 23 weight percent.

4. A process as claimed in Claims 1 to 3 wherein the isocyanate-terminated prepolymer is obtained from a poly(oxytetramethylene) glycol which has an average hydroxyl equivalent weight of from 500 to 1200.

5. A process as claimed in any one of the preceding claims wherein the polyether polyol component of the active hydrogen-containing composition is present in an amount of from 75 to 95 parts by weight and has an average hydroxyl equivalent weight of from 1000 to 3000 and a primary hydroxyl content of at least 75 percent, and wherein the chain-extending agent is present in an amount of from 5 to 15 parts by weight.

6. A process as claimed in Claim 1 wherein the blowing agent is present in an amount to provide the resulting polymer with an overall density of from 400 to 900 kg/m$^3$.

7. A process as claimed in Claim 6 wherein
   a) the polyisocyanate composition comprises, in from at least 90 weight percent, an isocyanate-terminated prepolymer which has an isocyanate content of from 14 to 23 weight percent that is obtained by reacting a polyisocyanate containing, in from at least 85 weight percent, 4,4'-methylene diphenylisocyanate with a poly(oxytetramethylene) glycol which has an average hydroxyl equivalent weight of from 750 to 1200; and
   b) the active hydrogen-containing composition comprises
      i) from 75 to 90 parts by weight of a polyether polyol or mixtures thereof which has an average hydroxyl equivalent weight of from 1000 to 3000, an average molar functionality of from 1.9 to 3.0 and a primary hydroxyl content of at least 75 percent of its total hydroxyl content; and
      ii) from 5 to 15 parts by weight of a chain-extending agent,
   wherein (a) is present in an amount to provide from 0.96 to 1.04 isocyanate groups per active hydrogen atom of the composition and water.

8. A process as claimed in Claim 7 wherein the blowing agent consists essentially of water.

**Patentansprüche**

**Patentansprüche für folgende Vertragsstaaten : DE, FR, GB, IT**

1. Verfahren, geeignet zur Herstellung eines mikrozellulären Polyurethan-Polymers durch inniges Vermischen einer organischen Polyisocyanat-Zusammensetzung mit einer aktiven Wasserstoff enthaltenden Zusammensetzung unter Reaktionsbedingungen für Schmelzpolymere in der Gegenwart eines Wasser umfassenden Treibmittels, dadurch gekennzeichnet, daß
   a) die Polyisocyanat-Zusammensetzung mindestens 70 Gew.-% eines isocyanatterminierten Präpolymers umfaßt, welches einen Isocyanat-Gehalt von 14 bis 28 Gew.-% aufweist und erhalten wird durch Umsetzen eines, mindestens 70 Gew.-% 4,4'-Methylendiphenylisocyanat enthaltenden Polyisocyanats mit einem Poly(oxytetramethylen)glycol mit einem mittleren Hydroxyläquivalentgewicht von 250 bis 1500;
   b) die aktiven Wasserstoff enthaltende Zusammensetzung umfaßt
      i) von 70 bis 99 Gewichtsanteile eines Polyetherpolyols oder Gemische davon mit einem mittleren Hydroxyläquivalentgewicht von 500 bis 5000, einer mittleren molaren Funktionalität von 1,6 bis 3,0 und einem Gehalt an primärem Hydroxyl von mindestens 50% seines gesamten Hydroxylgehalts und
      ii) von 1 bis 30 Gewichtsanteile eines Kettenverlängerungsmittels, welches ein Äquivalentgewicht von kleiner oder gleich 150 hat, und
   c) das Treibmittel, welches Wasser in einer Menge von 0,05 bis 2 Gewichtsanteilen, basierend auf dem Gesamtgewicht der aktiven Wasserstoff enthaltenden Zusammensetzung umfaßt, in einer

13

Menge vorliegt, welche ausreichend ist um das resultierende Polymer mit einer Gesamtdichte von 100 bis 1000 kg/m$^3$ vorzusehen

und worin die Polyisocyanat-Zusammensetzung (a) in einer Menge vorliegt um von 0,85 bis 1,3 Isocyanat-Gruppen pro aktivem Wasserstoffatom der Zusammensetzung (b) und des vorliegenden Wassers vorzusehen.

2. Verfahren nach Anspruch 1, worin die Polyisocyanat-Zusammensetzung in einer Menge vorliegt um von 0,94 bis 1,05 Isocyanat-Gruppen pro aktivem Wasserstoffatom der Zusammensetzung und des vorliegenden Wassers vorzusehen.

3. Verfahren nach Anspruch 2, worin das isocyanatterminierte Präpolymer einen Isocyanatgehalt von 14 bis 23 Gew.-% hat.

4. Verfahren nach den Ansprüchen 1 bis 3, worin das isocyanatterminierte Präpolymer aus einem Poly-(oxytetramethylen)glycol erhalten wird, welches ein mittleres Hydroxyläquivalentgewicht von 500 bis 1200 hat.

5. Verfahren nach einem der vorgehenden Ansprüchen, worin die Polyetherpolyolkomponente der aktiven Wasserstoff enthaltenden Zusammensetzung in einer Menge von 75 bis 95 Gewichtsanteilen vorliegt und ein mittleres Hydroxyläquivalentgewicht von 1000 bis 3000 und einen Gehalt an primärem Hydroxyl von mindestens 75% aufweist und worin das Kettenverlängerungsmittel in einer Menge von 5 bis 15 Gewichtsanteilen vorliegt.

6. Verfahren nach Anspruch 1, worin das Treibmittel in einer Menge vorliegt um das resultierende Polymer mit einer Gesamtdichte von 400 bis 900 kg/m$^3$ vorzusehen.

7. Verfahren nach Anspruch 6, worin
a) die Polyisocyanat-Zusammensetzung mindestens 90 Gew.-% eines isocyanatterminierten Präpolymers umfaßt, welches einen Isocyanatgehalt von 14 bis 23 Gew.-% hat, welches erhalten wird durch Umsetzen eines mindestens 85 Gew.-% 4,4'-Methylendiphenylisocyanat enthaltenden Polyisocyanats mit einem Poly(oxytetramethylen)glycol mit einem mittleren Hydroxyläquivalentgewicht von 750 bis 1200 und
b) die aktiven Wasserstoff enthaltende Zusammensetzung umfaßt
i) von 75 bis 90 Gewichtsanteile eines Polyetherpolyols oder Gemische davon mit einem mittleren Hydroxyläquivalentgewicht von 1000 bis 3000, einer mittleren molaren Funktionalität von 1,9 bis 3,0 und einem Gehalt an primärem Hydroxyl von mindestens 75% seines gesamten Hydroxylgehalts und
ii) von 5 bis 15 Gewichtsanteile eines Kettenverlängerungsmittels
worin (a) in einer Menge vorliegt um von 0,96 bis 1,04 Isocyanat-Gruppen pro aktivem Wasserstoffatom der Zusammensetzung und Wasser vorzusehen.

8. Verfahren nach Anspruch 7, worin das Treibmittel im wesentlichen aus Wasser besteht.

9. Mikrozelluläres Polyurethan-Polymer, welches gemäß einem Verfahren nach einem der vorhergehenden Ansprüche hergestellt wurde.

**Patentansprüche für folgenden Vertragsstaat : ES**

1. Verfahren, geeignet zur Herstellung eines mikrozellulären Polyurethan-Polymers durch inniges Vermischen einer organischen Polyisocyanat-Zusammensetzung mit einer aktiven Wasserstoff enthaltenden Zusammensetzung unter Reaktionsbedingungen für Schmelzpolymere in der Gegenwart eines Wasser umfassenden Treibmittels, dadurch gekennzeichnet, daß
a) die Polyisocyanat-Zusammensetzung mindestens 70 Gew.-% eines isocyanatterminierten Präpolymers umfaßt, welches einen Isocyanat-Gehalt von 14 bis 28 Gew.-% aufweist und erhalten wird durch Umsetzen eines, mindestens 70 Gew.-% 4,4'-Methylendiphenylisocyanat enthaltenden Polyisocyanats mit einem Poly(oxytetramethylen)glycol mit einem mittleren Hydroxyläquivalentgewicht von 250 bis 1500;
b) die aktiven Wasserstoff enthaltende Zusammensetzung umfaßt

i) von 70 bis 99 Gewichtsanteile eines Polyetherpolyols oder Gemische davon mit einem mittleren Hydroxyläquivalentgewicht von 500 bis 5000, einer mittleren molaren Funktionalität von 1,6 bis 3,0 und einem Gehalt an primärem Hydroxyl von mindestens 50% seines gesamten Hydroxylgehalts und

ii) von 1 bis 30 Gewichtsanteile eines Kettenverlängerungsmittels, welches ein Äquivalentgewicht von kleiner oder gleich 150 hat, und

c) das Treibmittel, welches Wasser in einer Menge von 0,05 bis 2 Gewichtsanteilen, basierend auf dem Gesamtgewicht der aktiven Wasserstoff enthaltenden Zusammensetzung umfaßt, in einer Menge vorliegt, welche ausreichend ist um das resultierende Polymer mit einer Gesamtdichte von 100 bis 1000 kg/m$^3$ vorzusehen

und worin die Polyisocyanat-Zusammensetzung (a) in einer Menge vorliegt um von 0,85 bis 1,3 Isocyanat-Gruppen pro aktivem Wasserstoffatom der Zusammensetzung (b) und des vorliegenden Wassers vorzusehen.

2. Verfahren nach Anspruch 1, worin die Polyisocyanat-Zusammensetzung in einer Menge vorliegt um von 0,94 bis 1,05 Isocyanat-Gruppen pro aktivem Wasserstoffatom der Zusammensetzung und des vorliegenden Wassers vorzusehen.

3. Verfahren nach Anspruch 2, worin das isocyanatterminierte Präpolymer einen Isocyanatgehalt von 14 bis 23 Gew.-% hat.

4. Verfahren nach den Ansprüchen 1 bis 3, worin das isocyanatterminierte Präpolymer aus einem Poly-(oxytetramethylen)glycol erhalten wird, welches ein mittleres Hydroxyläquivalentgewicht von 500 bis 1200 hat.

5. Verfahren nach einem der vorgehenden Ansprüchen, worin die Polyetherpolyolkomponente der aktiven Wasserstoff enthaltenden Zusammensetzung in einer Menge von 75 bis 95 Gewichtsanteilen vorliegt und ein mittleres Hydroxyläquivalentgewicht von 1000 bis 3000 und einen Gehalt an primärem Hydroxyl von mindestens 75% aufweist und worin das Kettenverlängerungsmittel in einer Menge von 5 bis 15 Gewichtsanteilen vorliegt.

6. Verfahren nach Anspruch 1, worin das Treibmittel in einer Menge vorliegt um das resultierende Polymer mit einer Gesamtdichte von 400 bis 900 kg/m$^3$ vorzusehen.

7. Verfahren nach Anspruch 6, worin

a) die Polyisocyanat-Zusammensetzung mindestens 90 Gew.-% eines isocyanatterminierten Präpolymers umfaßt, welches einen Isocyanatgehalt von 14 bis 23 Gew.-% hat, welches erhalten wird durch Umsetzen eines mindestens 85 Gew.-% 4,4'-Methylendiphenylisocyanat enthaltenden Polyisocyanats mit einem Poly(oxytetramethylen)glycol mit einem mittleren Hydroxyläquivalentgewicht von 750 bis 1200 und

b) die aktiven Wasserstoff enthaltende Zusammensetzung umfaßt

i) von 75 bis 90 Gewichtsanteile eines Polyetherpolyols oder Gemische davon mit einem mittleren Hydroxyläquivalentgewicht von 1000 bis 3000, einer mittleren molaren Funktionalität von 1,9 bis 3,0 und einem Gehalt an primärem Hydroxyl von mindestens 75% seines gesamten Hydroxylgehalts und

ii) von 5 bis 15 Gewichtsanteile eines Kettenverlängerungsmittels

worin (a) in einer Menge vorliegt um von 0,96 bis 1,04 Isocyanat-Gruppen pro aktivem Wasserstoffatom der Zusammensetzung und Wasser vorzusehen.

8. Verfahren nach Anspruch 7, worin das Treibmittel im wesentlichen aus Wasser besteht.

**Revendications**
**Revendications pour les Etats contractants suivants : DE, FR, GB, IT**

1. Procédé approprié pour la préparation d'un polymère microcellulaire de polyuréthane consistant à mélanger intimement, dans des conditions de réaction pour polymères de coulée, une composition de polyisocyanate organique avec une composition contenant des atomes d'hydrogène actif en présence d'un agent d'expansion contenant de l'eau, caractérisé en ce que

a) la composition de polyisocyanate comprend au moins 70% en poids d'un prépolymère à groupes terminaux isocyanate ayant une teneur en isocyanate de 14 à 28 % en poids et qui est obtenu par réaction d'un polyisocyanate contenant au moins 70 % en poids de 4,4'-di-isocyanate de diphénylméthane avec un poly(oxytétraméthylène)glycol qui a un poids moyen d'équivalent hydroxyle de 250 à 1500;

b) la composition contenant de l'hydrogène actif comprend

i) de 70 à 99 parties en poids d'un polyéther-polyol ou un mélange le contenant ayant un poids moyen d'équivalent hydroxyle de 500 à 5000, une fonctionnalité molaire moyenne de 1,6 à 3,0 et une teneur en fonctions hydroxyle primaires au moins égale à 50% de la teneur totale en fonctions hydroxyle, et

ii) de 1 à 30 parties en poids d'un agent d'extension de chaîne qui a un poids équivalent inférieur ou égal à 150, et

c) l'agent d'expansion contenant de 0,05 à 2 parties en poids d'eau, par rapport au poids total de la composition contenant de l'hydrogène actif, est présent en une quantité suffisante pour conférer au polymère résultant une densité globale de 100 à 1000 kg/m$^3$,

et dans lequel la composition de polyisocyanate (a) est présente en une quantité telle qu'elle fournit de 0,85 à 1,3 groupes isocyanate par atome d'hydrogène actif provenant de la composition (b) et de l'eau présente.

2. Procédé conforme à la revendication 1 dans laquelle la composition de polyisocyanate est présente en une quantité telle qu'elle fournit de 0,94 à 1,05 groupes isocyanate par atome d'hydrogène actif provenant de la composition et de l'eau présente.

3. Procédé conforme à la revendication 2 dans lequel le prépolymère portant des groupes terminaux isocyanate a une teneur en isocyanate de 14 à 23 % en poids.

4. Procédé conforme à la revendication 1 à 3 dans lequel le prépolymère portant des groupes terminaux isocyanate est obtenu à partir d'un poly(oxytétraméthylène)glycol qui a un poids moyen d'équivalent hydroxyle de 500 à 1200.

5. Procédé conforme à une quelconque des revendications précédentes dans lequel le composant polyéther-polyol de la composition contenant de l'hydrogène actif est présent à raison de 75 à 95 parties en poids et a un poids moyen d'équivalent hydroxyle de 1000 à 3000 et une teneur en groupes hydroxyle primaires d'au moins 75 % et dans lequel l'agent d'extension de chaîne est présent à raison de 5 à 15 parties en poids.

6. Procédé conforme à la revendication 1 dans lequel l'agent d'expansion est présent en une quantité suffisante pour conférer au polymère résultant une densité globale de 400 à 900 kg/m$^3$.

7. Procédé conforme à la revendication 6 dans lequel

a) la composition de polyisocyanate comprend au moins 90% en poids d'un prépolymère à groupes terminaux isocyanate ayant une teneur en isocyanate de 14 à 23 % en poids et qui est obtenu par réaction d'un polyisocyanate contenant au moins 85 % en poids de 4,4'-di-isocyanate de diphénylméthane avec un poly(oxytétraméthylène)glycol qui a un poids moyen d'équivalent hydroxyle de 750 à 1200;

b) la composition contenant de l'hydrogène actif comprend

i) de 75 à 90 parties en poids d'un polyéther-polyol ou un mélange le contenant ayant un poids moyen d'équivalent hydroxyle de 1000 à 3000, une fonctionnalité molaire moyenne de 1,9 à 3,0 et une teneur en fonctions hydroxyle primaires au moins égale à 75 % de la teneur totale en fonctions hydroxyle, et

ii) de 5 à 15 parties en poids d'un agent d'extension de chaîne,

dans lequel (a) est présent en une quantité suffisante pour fournir de 0,96 à 1,04 groupes isocyanate par atome d'hydrogène actif provenant de la composition et de l'eau.

8. Procédé conforme à la revendication 7 dans lequel l'agent d'expansion contient essentiellement de l'eau.

16

9. Polymère microcellulaire de polyuréthane préparé conformément au procédé revendiqué dans une quelconque des revendications précédentes.

**Revendications pour l'Etat contractant suivant : ES**

1. Procédé approprié pour la préparation d'un polymère microcellulaire de polyuréthane consistant à mélanger intimement, dans des conditions de réaction pour polymères de coulée, une composition de polyisocyanate organique avec une composition contenant des atomes d'hydrogène actif en présence d'un agent d'expansion contenant de l'eau, caractérisé en ce que

a) la composition de polyisocyanate comprend au moins 70 % en poids d'un prépolymère à groupes terminaux isocyanate ayant une teneur en isocyanate de 14 à 28 % en poids et qui est obtenu par réaction d'un polyisocyanate contenant au moins 70 % en poids de 4,4'-di-isocyanate de diphénylméthane avec un poly(oxytétraméthylène)glycol qui a un poids moyen d'équivalent hydroxyle de 250 à 1500;

b) la composition contenant de l'hydrogène actif comprend

i) de 70 à 99 parties en poids d'un polyéther-polyol ou un mélange le contenant ayant un poids moyen d'équivalent hydroxyle de 500 à 5000, une fonctionnalité molaire moyenne de 1,6 à 3,0 et une teneur en fonctions hydroxyle primaires au moins égale à 50 % de la teneur totale en fonctions hydroxyle, et

ii) de 1 à 30 parties en poids d'un agent d'extension de chaîne qui a un poids équivalent inférieur ou égal à 150, et

c) l'agent d'expansion contenant de 0,05 à 2 parties en poids d'eau, par rapport au poids total de la composition contenant de l'hydrogène actif, est présent en une quantité suffisante pour conférer au polymère résultant une densité globale de 100 à 1000 kg/m$^3$,

et dans lequel la composition de polyisocyanate (a) est présente en une quantité telle qu'elle fournit de 0,85 à 1,3 groupes isocyanate par atome d'hydrogène actif provenant de la composition (b) et de l'eau présente.

2. Procédé conforme à la revendication 1 dans laquelle la composition de polyisocyanate est présente en une quantité telle qu'elle fournit de 0,94 à 1,05 groupes isocyanate par atome d'hydrogène actif provenant de la composition et de l'eau présente.

3. Procédé conforme à la revendication 2 dans lequel le prépolymère portant des groupes terminaux isocyanate a une teneur en isocyanate de 14 à 23 % en poids.

4. Procédé conforme à la revendication 1 à 3 dans lequel le prépolymère portant des groupes terminaux isocyanate est obtenu à partir d'un poly(oxytétraméthylène)glycol qui a un poids moyen d'équivalent hydroxyle de 500 à 1200.

5. Procédé conforme à une quelconque des revendications précédentes dans lequel le composant polyéther-polyol de la composition contenant de l'hydrogène actif est présent à raison de 75 à 95 parties en poids et a un poids moyen d'équivalent hydroxyle de 1000 à 3000 et une teneur en groupes hydroxyle primaires d'au moins 75 % et dans lequel l'agent d'extension de chaîne est présent à raison de 5 à 15 parties en poids.

6. Procédé conforme à la revendication 1 dans lequel l'agent d'expansion est présent en une quantité suffisante pour conférer au polymère résultant une densité globale de 400 à 900 kg/m$^3$.

7. Procédé conforme à la revendication 6 dans lequel

a) la composition de polyisocyanate comprend au moins 90 % en poids d'un prépolymère à groupes terminaux isocyanate ayant une teneur en isocyanate de 14 à 23 % en poids et qui est obtenu par réaction d'un polyisocyanate contenant au moins 85 % en poids de 4,4'-di-isocyanate de diphénylméthane avec un poly(oxytétraméthylène)glycol qui a un poids moyen d'équivalent hydroxyle de 750 à 1200;

b) la composition contenant de l'hydrogène actif comprend

i) de 75 à 90 parties en poids d'un polyéther-polyol ou un mélange le contenant ayant un poids moyen d'équivalent hydroxyle de 1000 à 3000, une fonctionnalité molaire moyenne de 1,9 à 3,0 et une teneur en fonctions hydroxyle primaires au moins égale à 75 % de la teneur totale en

17

fonctions hydroxyle, et

ii) de 5 à 15 parties en poids d'un agent d'extension de chaîne,

dans lequel (a) est présent en une quantité suffisante pour fournir de 0,96 à 1,04 groupes isocyanate par atome d'hydrogène actif provenant de la composition et de l'eau.

8. Procédé conforme à la revendication 7 dans lequel l'agent d'expansion contient essentiellement de l'eau.